# EUROPEAN PATENT SPECIFICATION

(11) **EP 3 417 112 B1**
(45) Date of publication and mention of the grant of the patent: **02.09.2020**
(21) Application number: 17753553.1
(22) Date of filing: 15.02.2017
(51) Int. Cl.: E02B 17/02, B63B 35/00, F03D 13/00, F03D 13/25, F03D 13/40, E02B 17/00

(54) **A POSITIONING DEVICE AND AN ARRANGEMENT FOR INSTALLING A MONO-COLUMN PLATFORM IN THE SEABED OF THE SEA**
POSITIONIERUNGSVORRICHTUNG UND ANORDNUNG ZUM INSTALLIEREN EINER EINSÄULIGEN PLATTFORM IM MEERESBODEN
DISPOSITIF DE POSITIONNEMENT ET SYSTÈME D'INSTALLATION D'UNE PLATE-FORME MONO-COLONNE SUR LE FOND MARIN

(30) Priority: 18.02.2016 NO 20160289
(43) Date of publication of application: 26.12.2018
(73) Proprietor: Green Entrans AS, 4156 Mosterøy (NO)
(72) Inventor: HAUGVALDSTAD, Jørn, 4156 Mosterøy (NO)
(74) Representative: Håmsø Patentbyrå AS
(86) International application number: PCT/NO2017/050038
(87) International publication number: WO 2017/142418

(56) References cited:
- WO-A1-2015/012695
- US-A- 4 135 842
- US-A1- 2013 051 925

## Description

### Introduction

The present invention relates to a positioning device and an arrangement for installing a mono-column platform in the seabed of the sea. The mono-column platform may be used for energy exploitation, such as oil and gas exploitation, wind power, etcetera. The present invention also relates to a method for installing and detaching a mono-column platform in/from the seabed of the sea including the transportation to and from a position of installation.

### Prior art

Prior art offshore platforms comprises commonly a structure of minimum three legs solidly anchored in the seabed. These platforms provide a stable structure for withstanding harsh marine conditions of wind, currents, waves, etcetera, such as the conditions in the North Sea. While providing a rigid structure, the prior art platforms are costly to produce. In regards to energy exploitation, such as oil and gas exploitation, the platforms are generally maintained at the locations of energy exploitation, such at the locations of the oil and gas fields, both during establishing and exploitation. Accordingly, exploitation using prior art platforms can only be economical motivated for sufficiently large fields of stored energy, such as sufficiently large oil and gas fields. Offshore platforms may also be used for fundament of offshore wind power plants. Document US 4,135,842 discloses the features of the preamble of claim 1.

In order to reduce the costs of traditional offshore platforms, simplified offshore platforms are available comprising a single leg, so called mono-column platform. While providing a cost effective design the cost of installation is high in that the installation requires special arranged vessels with large dimensioned cranes for enabling the mono-column platform to be lifted from the vessel and oriented in the seabed of the sea. In particular, the installation process is demanding and costly for mono-column platform to be arranged on water depth of 40 m or more. Likewise, the detachment process of the mono-column platform is demanding and costly.

### Summary of the invention

The invention has for its object to remedy or to reduce at least one of the drawbacks of the prior art, or at least provide a useful alternative to prior art. In particular, a first object of the invention is to provide a device for installing and detaching a mono-column platform in the seabed of the sea without special arranged vessels comprising large dimensioned cranes. A second object of the invention is to provide a device for installing and detaching a mono-column platform with reduced costs and personnel involved. The invention also relates to an arrangement and a method for achieving the same.

These objects are achieved by means of a positioning device for installing a mono-column platform in the seabed of the sea, as defined by claim 1. The device is adapted to be arranged at a first floating structure and said mono-column platform is adapted to be arranged extending between the first floating structure and a second floating structure so that a first end portion of the mono-column platform is held by the first floating structure and a second end portion of the mono-column platform is held by the second floating structure, wherein the device comprises attachment means for holding the first end portion of the mono-column platform at the positioning device, and a first pivot adapted to enable the first end portion of the mono-column platform to be controllable pivoted while being held at the positioning device by the attachment means so that the first end portion of the mono-column platform is reoriented from a position between the first floating structure and the second floating structure towards the surface of the sea after that the second end portion of the mono-column platform has been released from the second floating structure.

The first pivot is adapted to enable a reorientation of the mono-column platform from a horizontal orientation to a vertical orientation in respect to the surface of the sea after the second end portion of the mono-column platform has been released from the second floating structure.

The attachment means provides an attachment of the first end portion of the mono-column platform and thereby assures that the first end portion of the mono-column platform is maintained at the device and above the surface of the water while the mono-column platform is reoriented from the horizontal orientation to the vertical orientation in respect to the surface of the sea.

The horizontal orientation relates to an orientation in which the mono-column platform is adapted to be transported to the position of installation or a position in vicinity of the position of installation. The horizontal orientation relates to an orientation in which the mono-column platform is adapted to be installed in the seabed of the sea. The mono-column platform is preferably arranged with buoyancy means for holding the mono-column platform floating above the seabed in the vertical orientation. When the mono-column platform has been arranged at its accurate position in respect to the seabed, the buoyancy of the buoyancy means is reduced so that the second end portion of the mono-column platform is lowered to engagement with the seabed.

The device has the advantage of enabling the mono-column platform to be installed without special arranged vessels with large dimensioned cranes for lifting and reorienting the mono-column platform into the sea from the horizontal orientation to the vertical orientation. The device of the invention enables the installation cost of the mono-column platform to be reduced. Accordingly, the overall cost of the mono-column platform is reduced compared with prior art traditional offshore platforms.

The first pivot comprises a first rotation axis that is extending away from a water line of the first floating structure. Preferably, first rotation axis is arranged perpendicular to the water line of the first floating structure. Moreover, preferably, the first floating structure is a vessel and the device is arranged at the stern of the vessel, wherein the water line is extending along the length of the vessel. According to the invention, the first rotation axis relates to a pitch rotational axis in relation to the first floating structure.

The positioning device further comprises a second pivot comprising a second rotation axis in relation to the first floating structure. The second rotation extending away from a horizontal plane of the first floating structure. The second rotation axis is preferably perpendicular to the horizontal plane of the first floating structure. The horizontal plane of the first floating structure is a plane extending parallel to the surface of the sea when the first floating structure is in rest in respect to the surface of the sea. The second pivot is adapted to enable the device to adjust to relative movement of the first floating structure and the second floating structure during an initial stage of the installation before the second end portion of the mono-column platform has been released from the second floating structure. According to the invention, the second rotation axis relates to a yaw rotational axis in relation to the first floating structure.

The positioning device further comprises a third pivot comprising a third rotation axis in relation to the first floating structure. The third rotation axis is extending away from a horizontal plane of the first floating structure, wherein the third pivot is arranged adjacent to the first pivot, and the second pivot and the third pivot are arranged spaced apart from each other. The third rotation axis is preferably perpendicular to the horizontal plane of the first floating structure. According to the invention, the third rotation axis relates to a roll rotational axis in relation to the first floating structure.

By means of the third pivot, the positioning device is adapted to adjust to movements of the mono-column platform when the mono-column platform has been released from the second floating structure. This is in particular of importance when the mono-column platform has been oriented in the upstanding orientation or vertical orientation in respect to the surface of the sea. Preferably, the second pivot is arranged adjacent to the deck of the first floating structure and the third pivot is arranged elevated further away from the second pivot in vicinity of the second pivot. Furthermore, the second rotation axis and the third rotation axis are preferably parallel or essentially parallel. The second pivot is adapted to be attached in a deck of the first floating structure.

According to the invention, the positioning device comprises an arm connected to the second pivot and comprising the first pivot and the third pivot, wherein the arm is arranged extending away from the rim of the first floating structure. Preferably, the first pivot and the third pivot are arranged at an end portion of the arm.

According to an embodiment of the invention, the attachment means comprises at least one engagement member adapted to be moved between an engaged state in which the engagement member engages with an envelope surface of the mono-column platform and a disengaged state in which the mono-column platform is released from the positioning device at the first floating structure.

According to an embodiment of the invention, the attachment means comprise a cradle member adapted to hold the mono-column platform rotatable and axial displaceable in respect to an elongated axis of the mono-column platform. The cradle member is adapted to enable the device to adjust to relative movement of the first floating structure and the second floating structure during an initial stage of the installation before the second end portion of the mono-column platform has been released from the second floating structure. The relative movement of the first floating structure and the second floating structure is for example movements due to waves and wind subjected thereto.

According to an embodiment which is not claimed, the cradle member comprises a curvature at least partly corresponding to an envelope surface of the mono-column platform. By means of the curvature, rotation of the mono-column platform on the cradle member is facilitated.

The above objects are further achieved by means of an arrangement according to claim 4. The arrangement is characterised in that the arrangement comprises
- a first floating structure and a second floating structure for transporting the mono-column platform to a position of installation or in vicinity to a position of installation, wherein the first floating structure is adapted to hold a first end portion of the mono-column platform above the surface of the sea and the second floating structure is adapted to hold a second end portion of the mono-column platform above the surface of the sea, and
- a positioning device according to any of claim 1-7 arranged at the first floating structure, wherein the first pivot of the positioning device is adapted to enable the first end portion of the mono-column platform to be controllable pivoted while being held at the positioning device by the attachment means so that the first end portion of the mono-column platform is reoriented towards the surface of the sea after that the second end portion of the mono-column platform has been released from the second floating structure.

The arrangement enables a cost effective transportation and installation of the mono-column platform in the seabed of the sea. In particular, the arrangement enables the mono-column platform to be installed without special arranged vessels with large dimensioned cranes for lifting and reorienting the mono-column platform into the sea from the horizontal orientation to the vertical orientation.

According to an embodiment which is not claimed, the first floating structure and the second floating structure are adapted to be arranged spaced apart with a spacing while holding the mono-column platform. By means of the use of the first and the second floating structure separated from each other, a large dimensioned mono-column platform can be transported and installed with relative modest sized vessels and without requirements on special large dimensioned cranes for the installation.

According to an embodiment of the invention, the first floating structure and the second floating structure are connected by a first wiring arrangement.

According to an embodiment which is not claimed, the first wiring arrangement is arranged extending between the first floating structure and the second floating structure.

According to an embodiment which is not claimed, the first floating structure and second floating structure are spaced apart with the spacing when transporting the mono-column platform. Preferably, the first wiring arrangement comprises one or more towing wires. By means of connecting the first and second floating structure separated by the spacing, a simplified and cost effective transportation of the mono-column platform is provided.

According to an embodiment of the invention, the arrangement comprises a second wiring arrangement connected between the first floating structure and the second end portion of the mono-column platform. The second wiring arrangement is adapted to facilitate the control of the rotation of the mono-column platform on the device from a horizontal orientation or essentially a horizontal orientation to an upstanding orientation, preferably a vertical orientation in respect to the surface of the sea.

According to an embodiment which is not claimed, the first floating structure is a vessel comprising propulsion means. Preferably, the first floating structure is configured to tow the second floating structure to the position of installation.

According to an embodiment which is not claimed, the first floating structure is a vessel with propulsion means. By using the first floating structure for towing the second floating structure, the second floating structure may be simple arranged, such as a barge and similar design.

According to an embodiment which is not claimed, the first floating structure and the second floating structure are floating structures without propulsion means. Thereby, a simple vessel such as a towing boat can be used for towing the first floating structure and second floating structure. Thereby, the first floating structure and the second floating structure may be simple arranged, such as a barge and similar design. According to an embodiment of the invention, at least one of the arrangement and the mono-column platform comprises an adjustable buoyancy element adapted to provide buoyancy to the mono-column platform, and wherein the arrangement comprises means for regulating the buoyancy of the buoyancy element.

Preferably, the buoyancy element is in the form of one or more chambers of the mono-column platform that are adapted to be controllably be regulated with water and air to an extent that provides positive, neutral and negative buoyancy in respect to the water of the sea. Alternative, the mono-column platform may be provided with buoyancy element that are present only during the installation procedure.

According to an embodiment which is not claimed, the mono-column platform comprises at least one suction anchor for attaching the second end portion of the mono-column platform, which suction anchor comprises an active state and an inactive state, and wherein the arrangement comprises means for providing suction to the suction anchor that is adapted to be applied when the suction anchor is in the active state.

The at least one suction anchor is adapted to provide an anchoring of the mono-column platform after that the second end portion of the mono-column platform has been brought into contact with the seabed of the sea. The suction anchor is adapted to create an under negative pressure in respect to the ambient pressure that securely fixes the suction anchor and the second end portion of the mono-column platform to the seabed. The means for providing suction may for example be provided by means of a remotely operated underwater vehicles (ROV). The ROV also enables connection and disconnection of the means for providing suction.

According to an embodiment of the invention, the arrangement comprises a displacement arrangement at the second floating structure, which displacement arrangement is adapted to enable the second end portion of the mono-column platform to be displaced on the displacement arrangement away from the second floating structure. The displacement arrangement is adapted to enable the mono-column platform to be released from the second floating structure by means of pulling the second floating structure away from the first floating structure, thereby displacing the second end portion of the mono-column platform on the displacement arrangement until being released from the second floating structure.

According to an embodiment of the invention, the displacement arrangement comprises an elongated frame extending at least partly along a length of the second floating structure. The frame enables a displacement of the second end portion of the mono-column platform. Preferably, the frame is provided with means for facilitating the displacement of the second end portion of the mono-column platform, such as roller, balls, etcetera.

According to an embodiment of the invention, the frame comprises a protruding portion arranged extending away from a rim of the second floating structure. The protruding part of the frame is adapted to assure that the second end portion of the mono-column platform is released without interaction with the second floating structure.

The objects of the invention is further achieved by means of a method for installing a mono-column platform in the seabed of the sea according to claim 10. The method comprises
- transporting the mono-column platform to a position of installation or a position in vicinity to the position of installation,
- setting the attachment means to the engaged state so that the first end portion is fixed to the positioning device at the first floating structure,
- releasing the second end portion of the mono-column platform from the second floating structure,
- rotating the first pivot of the positioning device so that the first end portion of the mono-column platform is reoriented towards the surface of the sea, and
- setting the attachment means to the disengaged state so that the first end portion is released from the positioning device.

The mono-column platform is for example transported from a port to the position of installation or a position in vicinity to the position of installation, where the installation procedure is initiated. The installation comprises setting the attachment means to the engaged state. The attachment means may also be in the engaged state during transportation. The attachment means is adapted to hold the first end portion of the mono-column platform at the position device during reorienting the mono-column platform from a horizontal orientation to an upstanding orientation, preferably a vertical orientation in respect to the surface of the sea.

The reorientation of the mono-column platform comprises releasing the second end portion of the mono-column platform from the second floating structure and rotating the first end portion of the mono-column platform on the first pivot until the mono-column platform is arranged in the upstanding orientation in respect to the surface of the sea. The method comprises thereafter the step of setting the attachment means to the disengaged state. Thereby, the first end portion of the mono-column platform is released from the positioning device.

According to an embodiment of the invention, the release of the second end portion of the mono-column platform from the second floating structure comprises the steps of:
- detaching a first wiring arrangement between the first floating structure and the second floating structure, and
- moving the second floating structure away from the first floating structure so that the second end portion of the mono-column platform is released from the second floating structure.

The method comprises detaching the first wiring arrangement before the releasing the second end portion of the mono-column platform from the second floating structure. Thereafter, the second floating structure is displaced away from the first floating structure. Thereby, the second end portion of the mono-column platform is pulled away from a rim of the second floating structure and released from the second floating structure.

According to an embodiment of the invention, the method further comprises
- setting the mono-column platform to a neutral or close to neutral buoyancy in respect to the water of the sea, and
- rotating the first pivot of the positioning device so that the first end portion of the mono-column platform is reoriented towards the surface of the sea while maintaining a neutral or close to neutral buoyancy of the mono-column platform structure.

By setting the mono-column platform to a neutral or close to neutral buoyancy in respect to the water of the sea, the mono-column platform can be reoriented from the horizontal orientation to the vertical orientation with small resistance.

According to an embodiment which is not claimed, the mono-column platform is set to a neutral buoyancy or slightly negative buoyancy in respect to the water of the sea when rotating the mono-column platform from a horizontal position to a vertical position in respect to the surface of the sea.

According to an embodiment which is not claimed, the mono-column platform is set to a negative buoyancy corresponding to 0 - 10 % of the weight of the mono-column platform, preferably a negative buoyancy corresponding to 2 - 5 % of the weight of the mono-column platform, when rotating the mono-column platform from a horizontal orientation to an upstanding orientation in respect to the surface of the sea.

According to an embodiment of the invention, the method comprises - controlling displacement of the second end portion of the mono-column platform by means of the second wiring arrangement while the first end portion of the mono-column platform is rotated on the first pivot of the positioning device.

The second wiring arrangement is providing a connection between the first floating structure and the second end portion of the mono-column platform. By means of controlling the stress of the second wiring arrangement during reorienting the mono-column platform, the control of the reorientation of the mono-column platform is facilitated.

According to an embodiment of the invention, the method comprises detaching the second wiring arrangement from the second end portion of the mono-column platform after the mono-column platform has been arranged in an upstanding position in respect to the surface of the sea. The upstanding position is preferably a vertical orientation in in respect to the surface of the sea. According to an embodiment of the invention, the method further comprises - decreasing the buoyancy of the mono-column platform after the mono-column platform has been arranged in an upstanding position in respect to the surface of the sea. The upstanding position is preferably a vertical orientation in in respect to the surface of the sea.

The buoyancy of the mono-column platform is further decreased when the mono-column platform has been oriented in the upstanding orientation or vertical orientation so that the mono-column platform sinks towards the seabed.

According to an embodiment which is not claimed, the mono-column platform is set to a negative buoyancy corresponding to 5 - 30 % of the weight of the mono-column platform, more preferably a negative buoyancy corresponding to 11 - 15 % of the weight of the mono-column platform, after the mono-column platform has been arranged in an upstanding position in respect to the seabed of the sea.

According to an embodiment of the invention, the method further comprises
- anchoring the second end portion of the platform in the seabed.

According to an embodiment which is not claimed, the method further comprises
- connecting means for providing suction to the at least one suction anchor,
- setting the at least one suction anchor to the active state, and
- providing suction to the one or more suction anchors.

By setting the suction anchor to the active state, the pressure of a chamber in the suction is adapted to be adjusted by the means for providing suction. The means for providing suction is adapted to generate a negative pressure in respect to the ambient pressure. Thereby, the suction anchor forms an attachment of the mono-column platform to the seabed of the sea.

According to an embodiment which is not claimed, the method further comprises
- setting the at least one suction anchor to the inactive state,
- interrupting suction to the at least one suction anchor, and
- disconnecting the means for providing suction to the at least one suction anchor.

After that the suction anchor has formed an attachment in the seabed, the suction anchor is set to the inactive state. Thereby, the chamber in the suction is interrupted from adjustment. Thereafter, the means for providing suction is removed from the suction anchor.

The objects of the invention is further achieved by means of a method for detaching the mono-column platform according to claim 14. The method comprises
- setting the attachment means of the positioning device to the disengaged state,
- receiving the first end portion of the mono-column platform by the attachment means of the position device,
- setting the attachment means of the positioning device to the engaged state so that the first end portion is held at the positioning device, and
- rotating the first pivot of the positioning device so that the first end portion of the mono-column platform is reoriented away from the surface of the sea, and
- transporting the mono-column platform away from the position of installation.

The first end portion of the mono-column platform is received by the attachment means when the attachment means is in the disengaged state. Thereafter, the attachment means is changed to the engaged state so that the first end portion of the mono-column platform is maintained at the positioning device. The first end portion is rotated away from the surface of the sea, i.e. towards the first floating structure. Accordingly, the mono-column platform is reoriented towards a more horizontal orientation, which enables the mono-column platform to be transported away from the position of installation.

According to an embodiment of the invention, the method comprises
- releasing anchoring of the second end portion of the mono-column platform from the seabed of the sea.

According to an embodiment which is not claimed, the method comprises
- setting the at least one suction anchor to the active state, and
- releasing suction from the at least one suction anchors.

The anchoring of the mono-column platform is released by means of releasing the anchoring provided by the suction anchors, which comprises setting suction anchor to the active state and releasing pressure in the chamber of the suction anchor. Thereby, the pressure in the chamber is changed to the ambient pressure and the anchoring of the mono-column platform is released from the seabed.

According to an embodiment of the invention, the method comprises
- increasing the buoyancy of the mono-column platform after releasing anchoring of the mono-column platform.

Preferably, the mono-column platform is set to a neutral or close to neutral buoyancy. The buoyancy of the mono-column platform is increased, which enables the mono-column platform to be lifted away from the seabed with small resistance so that a spacing is formed between the second end portion of the mono-column platform and the seabed. Thereafter, the first end portion is attached to the positioning device by means of the attachment means.

### Brief description of the drawings

In the following is described examples of preferred embodiments illustrated in the accompanying drawings, wherein:
- Fig. 1: discloses an arrangement for installing a mono-column platform in the seabed of the sea according to an embodiment of the invention;
- Fig. 2a-b: discloses an example of a positioning device of the arrangement in fig. 1;

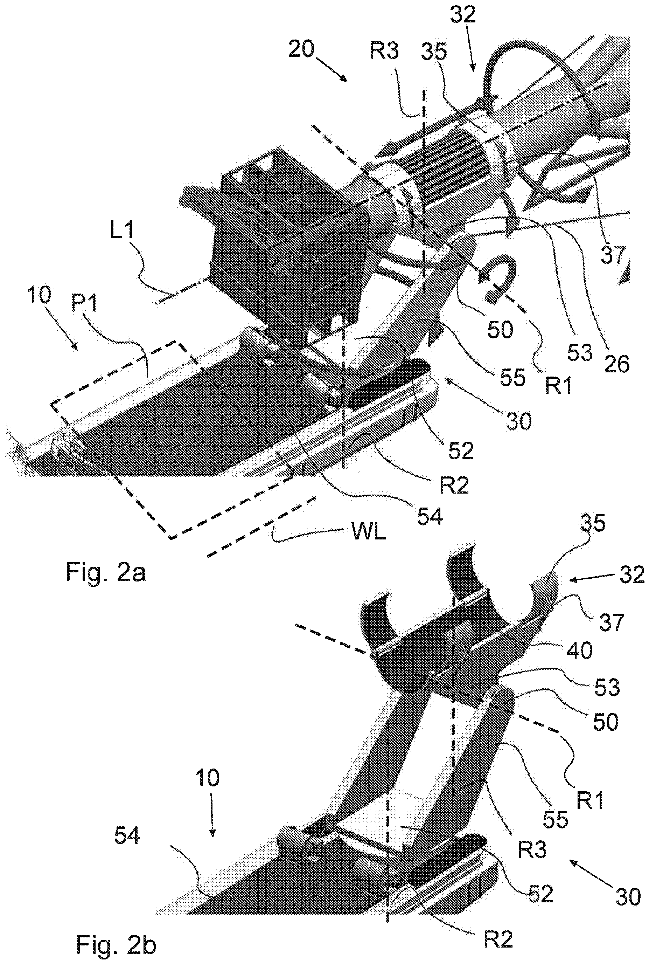

- Fig. 2a: discloses the positioning device holding the mono-column platform between a first floating structure and a second floating structure;

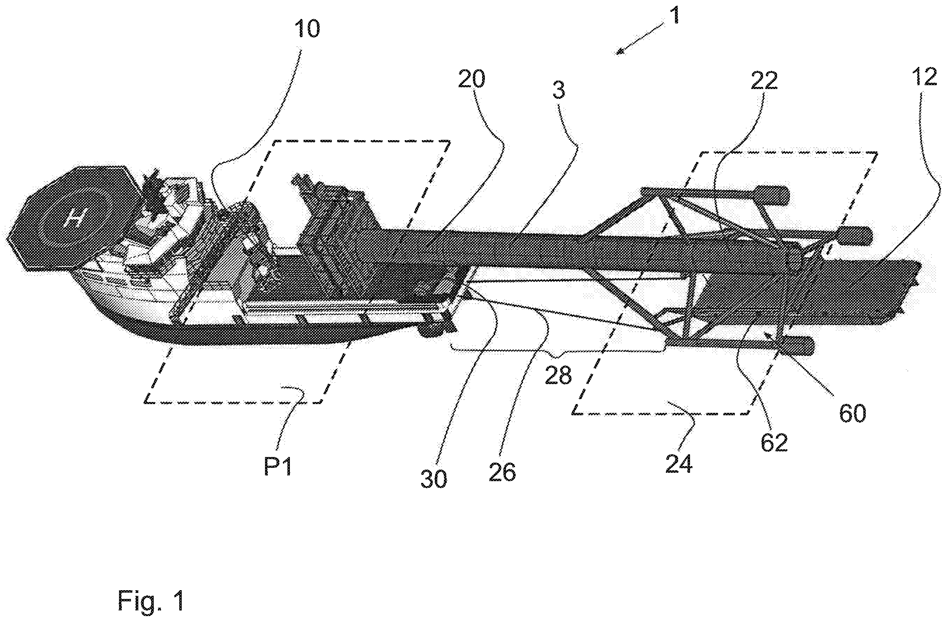

- Fig. 2b: discloses the positioning device in fig. 1 without the mono-column platform;

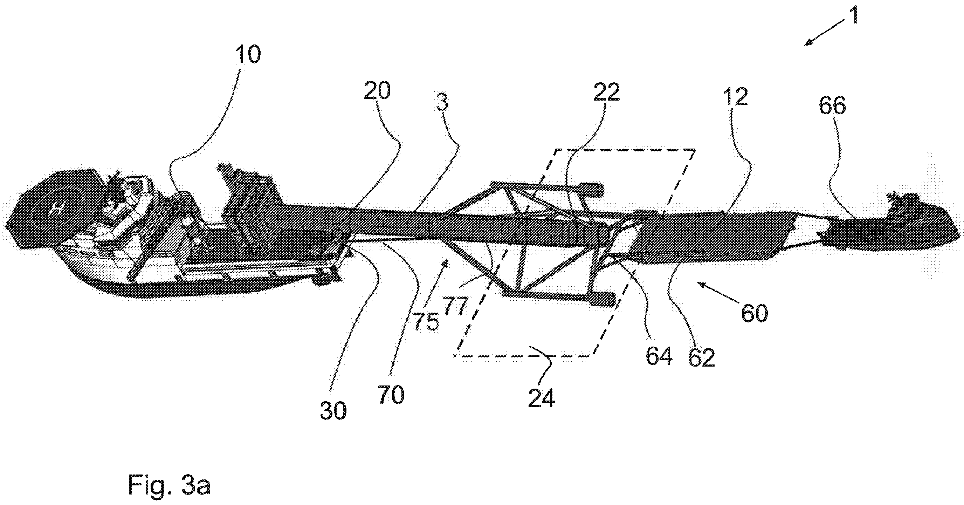

- Fig. 3a-c: discloses different steps of a method for installing the mono-column platform by means of the arrangement according to an embodiment of the invention;
- Fig. 3a: discloses an initial stage of the installation in which the mono-column platform is in a horizontal orientation;

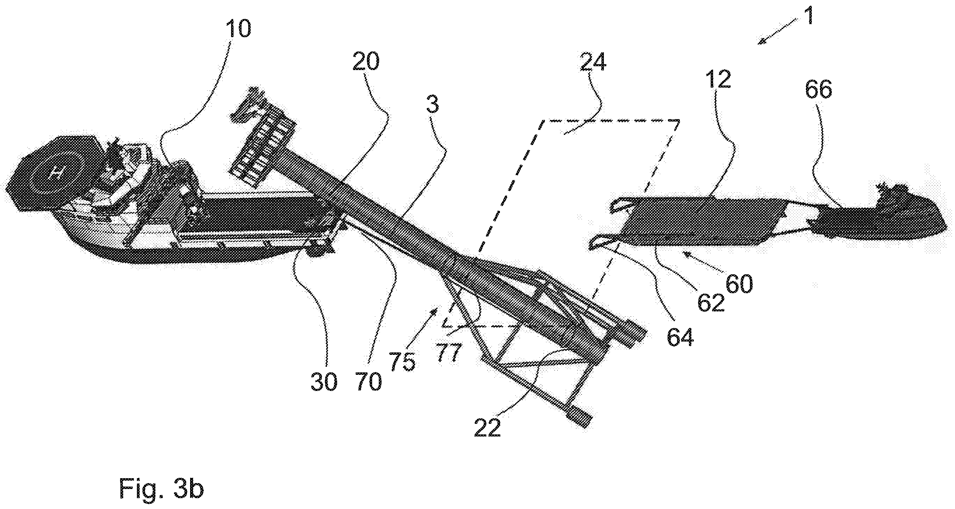

- Fig. 3b: discloses a rotational stage the installation in which the mono-column platform is under rotation from the horizontal orientation to a vertical orientation.

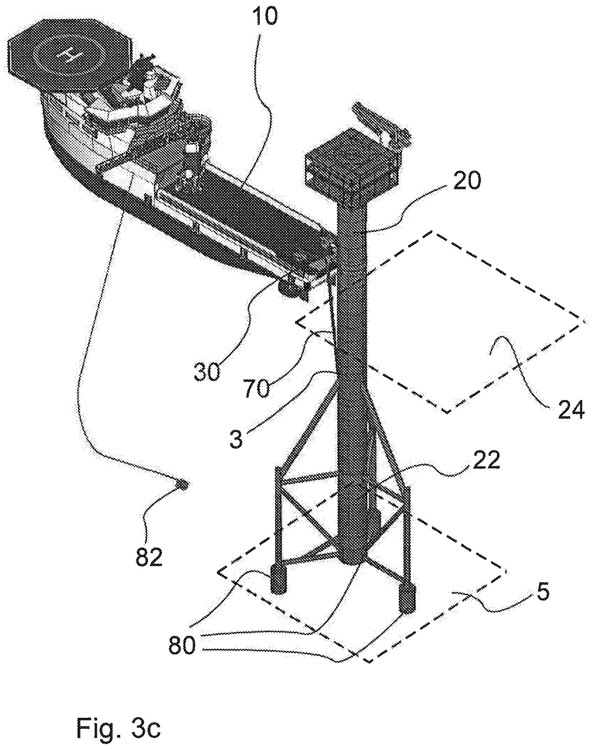

- Fig. 3c: discloses a connection stage of the installation in which the mono-column platform is oriented in the vertical orientation;

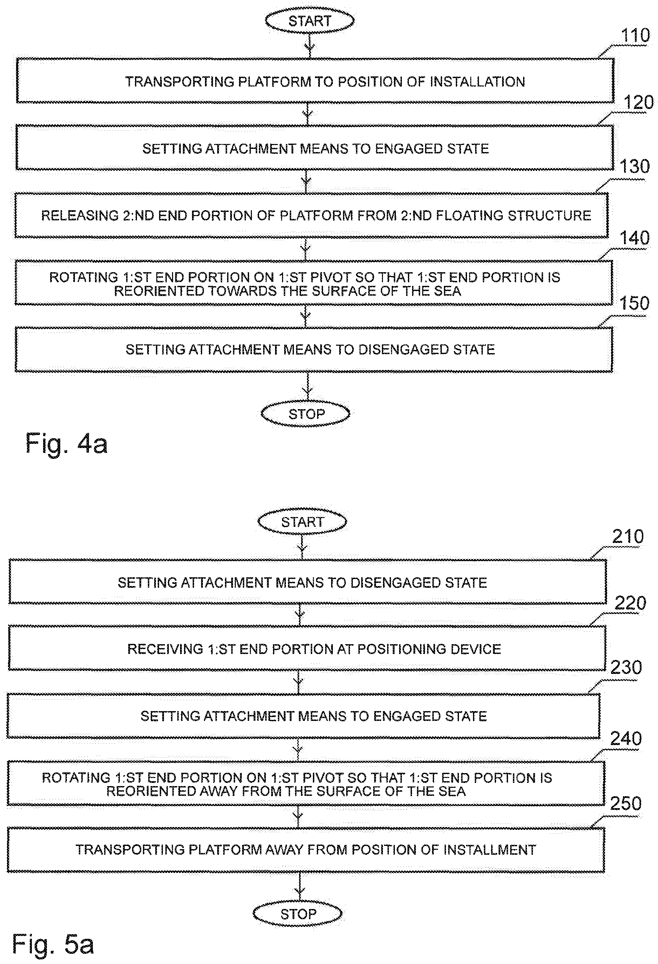

- Fig. 4a: discloses a flow chart of a method for installing a mono-column platform in the sea-bed of the sea according to an embodiment of the invention;

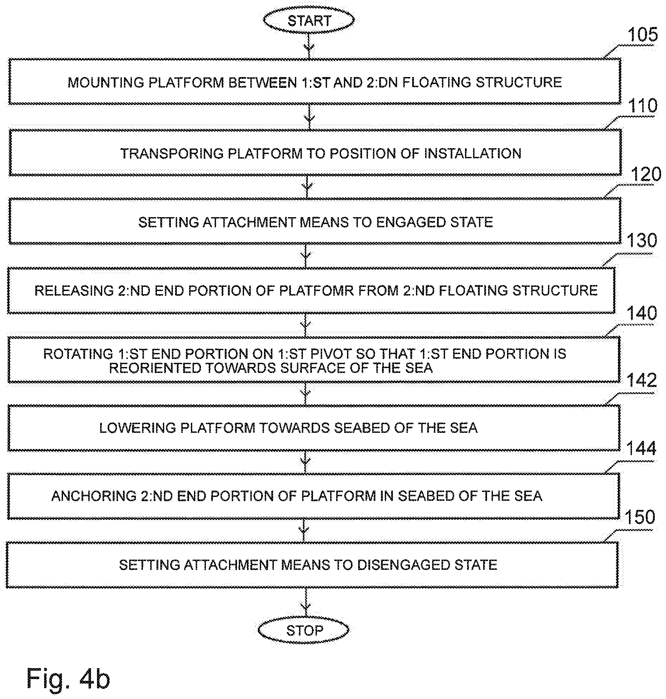

- Fig. 4b: discloses a flow chart of a method for installing a mono-column platform in the sea-bed of the sea according to another embodiment; and
- Fig. 5a: discloses a flow chart for detaching a mono-column platform from the seabed of the sea according to another embodiment of the invention; and

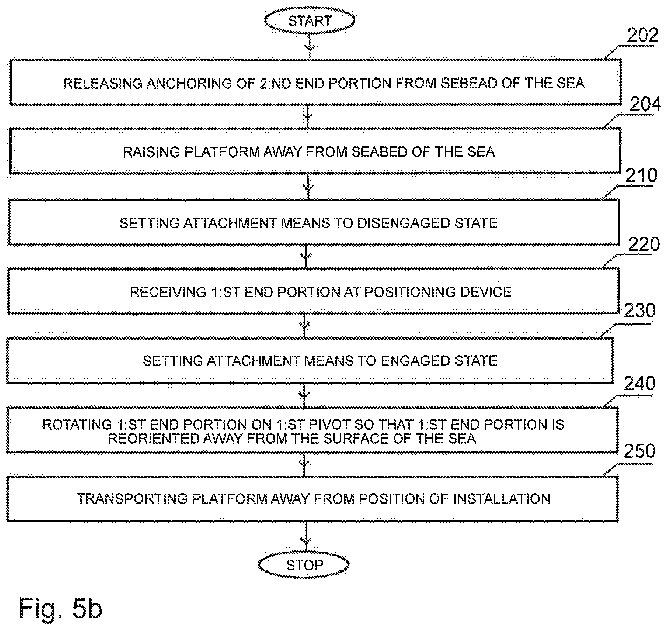

- Fig. 5b: discloses a flow chart for detaching a mono-column platform from the seabed of the sea according to another embodiment.

### Detail description of the invention

In fig. 1 and fig. 3a-c an arrangement 1 for installing a mono-column platform 3 in the seabed 5 of the sea according to the invention is disclosed. In fig. 1 the mono-column platform 3 is transported to a position of installation and in fig. 3c the mono-column platform 3 has been brought to contact with the seabed 5.

The arrangement 1 comprises a first floating structure 10 and a second floating structure 12 for transporting the mono-column platform 3 to a position of installation or in vicinity to a position of installation. The first floating structure 10 is adapted to hold a first end portion 20 of the mono-column platform 3 above the surface 24 of the sea. The second floating structure 12 is adapted to hold a second end portion 22 of the mono-column platform 3 above the surface 24 of the sea. The arrangement 1 comprises a first wiring arrangement 26 for connecting the first floating structure 10 with the second floating structure 12. The first wiring arrangement 26 is for example one or more towing wires. The first wiring arrangement 26 connects the first floating structure 10 and the second floating structure 12 so that the first floating structure 10 and the second floating structure 12 are separated from each other by a spacing 28. Thereby, the necessary size of the first floating structure 10 and second floating structure 12 are reduced compared to employment of a single floating structure.

The first floating structure 10 is for example a vessel comprising propulsion means, such as a ship, and the second floating structure 12 is for example a barge that lacks essential means of propulsion for displacing itself. Accordingly, the arrangement 1 is preferably configured so that the first floating structure 10 tows the second floating structure 12 to the position of installation while holding the mono-column platform 3 between the first floating structure 10 and the second floating structure 12.

The arrangement 1 further comprises a positioning device 30 adapted to be arranged at the first floating structure 10, see fig. 1. An example of the positioning device 30 is disclosed in further details in fig. 2a and 2b.

The positioning device 30 comprises attachment means 32 for holding the first end portion 20 of the mono-column platform 3 at the positioning device 30. The attachment means 32 is adapted to be changed between an engaged state and a disengaged state. The first end portion 20 of the mono-column platform 3 is adapted to be held at the positioning device 30 when the attachment means 32 is in the engaged state. The first end portion 20 of the mono-column platform 3 is adapted to be free from engagement when the attachment means 32 is in the disengaged state.

The attachment means 32 comprises an engagement member 35 adapted to be moved between an engaged state in which the engagement member 35 engages with an envelope surface 24 of the mono-column platform 3 and a disengaged state in which the mono-column platform 3 is free to be displaced away from the positioning device 30 at the first floating structure 10.

In the disclosed embodiment the engagement member 35 comprises two pairs of adjustable attachment arms that are movable so that, when the attachment means 32 is brought to the engaged state, the attachment arms encircles the first end portion 20 of the mono-column platform 3 and thereby holds the first end portion 20 of the mono-column platform 3 at the positioning device 30, see fig. 2a. Vice versa, when the attachment means 32 is brought to the disengaged state, the attachment arms enable the first end portion 20 of the mono-column platform 3 to be displaced away from the positioning device 30 without interaction, see fig. 2b. The attachment means 32 further comprises a first drive unit 37, such one or more electric, hydraulic, pneumatic induced cylinders, for moving the attachment member 35 between positions corresponding to the engaged state and disengaged state.

The attachment means 32 is set to the disengaged state when the mono-column platform 3 has been reoriented to an upstanding or a vertical orientation, as will be explain in detail in the following. It shall also be understood that the attachment means 32 are adapted to be set to the disengaged state when the mono-column platform 3 is loaded on the first floating structure 10 and the second floating structure 12, such as in a port, prior to transporting the mono-column platform 3 to the position of installation.

The attachment means 32 further comprise a cradle member 40 adapted to hold the mono-column platform 3 rotatable and axial displaceable in respect to an elongated axis L of the mono-column platform 3. The cradle member 40 is arranged with a curvature at least partly corresponding to an envelope surface of the mono-column platform 3. In the disclosed embodiment, the first end portion 20 of the mono-column platform 3 comprises a circular envelope surface and the cradle member 40 comprises a corresponding circular curvature for receiving the first end portion 20 of the mono-column platform 3.

The attachment means 32 is preferably configured to hold the first end portion 20 of the mono-column platform 3 rotatable and axial displaceable in in respect to its longitudinal axis L. Thereby, the attachment means 32 is adapted to adjust to movements due to waves and winds during transportation of the mono-column platform 3 to the position of installation. Likewise, the attachment means 32 is adapted to allow the mono-column platform 3 to adjust to movements due to waves and winds during installation when the mono-column platform 3 has been oriented in the upstanding or the vertical orientation.

With reference to fig. 2a, the device 30 further comprises a first pivot 50 adapted to enable the first end portion 20 of the mono-column platform 3 to be controllable pivoted while being held at the positioning device 30 by the attachment means 32. Thereby, the first end portion 20 of the mono-column platform 3 is adapted to be reoriented towards the surface 24 of the sea after that the second end portion 22 of the mono-column platform 3 has been released from the second floating structure 12, see also fig. 3a-c.

The first pivot 50 comprises a first rotation axis R1 that is extending away from a water line WL of the first floating structure 10. In the disclosed embodiment, the first floating structure 10 is a vessel and the positioning device 30 is arranged in the stern of the vessel. The water line WL extends along the length of the vessel. Preferably, the first rotation axis R1 is directed perpendicular to the water line WL of the first floating structure 10. Accordingly, the first pivot 50 of the positioning device 30 enables the mono-column platform 3 to be reoriented from the horizontal orientation to the upstanding or the vertical orientation.

The positioning device 30 further comprises a second pivot 52 comprising a second rotation axis R2 extending away from a horizontal plane P1 of the first floating structure 10 that is adapted to be parallel to the surface 24 of the sea. Preferably, the second rotation axis R2 is extending perpendicular to a horizontal plane P1 of the first floating structure 10. The horizontal plane P1 is adapted to be parallel to the surface 24 of the sea. In the disclosed embodiment, the second pivot 52 is arranged in vicinity to a deck 54 of the first floating structure 10. However, it shall be understood that the second pivot 52 may be arranged elevated from the deck 54 of the first floating structure 10.

The positioning device 30 further comprises a third pivot 53 comprising a third rotation axis R3 extending away from a horizontal plane P1 of the first floating structure 10. In the disclosed embodiment, the positioning device 30 comprises an arm 55 connected to the second pivot 52 so that the arm 55 extends away from a rim of the first floating structure 10. The third pivot 53 is arranged adjacent to the first pivot 50 at an end portion of the arm 55.

The third rotation axis R3 is preferably perpendicular to the horizontal plane P1 of the first floating structure 10. In the disclosed embodiment, the second rotation axis R2 and the third rotation axis R3 are parallel to each other.

It shall be understood that the positioning device 30 may be arranged with only one of the second pivot 52 and the third pivot 53. In particular, the positioning device 30 may be configured so that the first pivot 50 and the third pivot 53 are arranged at the end portion of the arm 55 and without the second pivot 52 at the deck 54 of the first floating structure 10.

By means of the third pivot 53, the positioning device 30 is adapted to adjust to movements of the mono-column platform 3 when the mono-column platform 3 has been released from the second floating structure 22 and mono-column platform 3 is reoriented in the water of the sea. This is in particular of importance when the mono-column platform 3 has been oriented in the upstanding orientation or vertical orientation in respect to the surface 24 of the sea.

The arrangement 1 further comprises a displacement arrangement 60 at the second floating structure 12. The displacement arrangement 60 is adapted to enable the second end portion 22 of the mono-column platform 3 to be displaced on the displacement arrangement 60 away from the second floating structure 12, thereby releasing the second end portion 22 of the mono-column platform 3 from the second floating structure 12.

The second end portion 22 of the mono-column platform 3 is adapted to be released from the second floating structure 12 by means of pulling the second floating structure 12 away from the first floating structure 10 while the first end portion 20 of the mono-column platform 3 is held be the attachment means 32 of the positioning device 30 at the first floating structure 10.

In the disclosed embodiment, the displacement arrangement 60 comprises an elongated frame 62 that extends along the length of the second floating structure 12. The frame 62 comprises a protruding portion 64 that is protruding away from a rim of the second floating structure 12. By means of the protruding portion 64 the second end portion 22 of the mono-column platform 3 is adapted to be released without interaction with the second floating structure 12.

With reference to fig. 3a-c, the reorientation of the mono-column platform 3 from the horizontal orientation to the upstanding or the vertical orientation will now be explained in detail.

In fig. 3a, the mono-column platform 3 arranged in the horizontal orientation between the first floating structure 10 and the second floating structure 12. The attachment means 32 of the positioning device 30 is in the engaged state and the first end portion 20 of the mono-column platform 3 is held at the positioning device 30 at the first floating structure 10. The connection of the first wiring arrangement 26 between the first floating structure 10 and the second floating structure 12 has been released. The second end portion 22 of the mono-column platform 3 is being displaced on the elongated frame 62 by means of that the second floating structure 12 is being displaced away from the first floating structure 10. In the disclosed embodiment, a tug boat 66 has been attached to the second floating structure 12 and is pulling second floating structure 12 away from the first floating structure 10. In fig. 3a, the second end portion 22 of the mono-column platform 3 has been displace on the frame 62 to a degree that it is located on the protruding portion 64 of the frame 62 and is about to be released from the second floating structure 12.

In fig. 3a, a second wire arrangement 70 has been connected between the between the first floating structure 10 and the second end portion 22 of the mono-column platform 3. The second wiring arrangement 70 is adapted to facilitate the control of the rotation of the mono-column platform 3 from the horizontal orientation to the upstanding or the vertical orientation by means of adjusting the stress subjected to the second wiring arrangement 70, thereby pulling the second end portion 22 of mono-column platform 3 while the first end portion 20 of the mono-column platform 3 is rotated on the first pivot 50 of the positioning device 30.

The arrangement 1 further comprises an adjustable buoyancy element 75 adapted provide buoyancy to the mono-column platform 3. In the disclosed embodiment the buoyancy element 75 is in the form of one or more chambers 77 in the mono-column platform 3 that are adapted to be controllably be filled with water and air so that the buoyancy of the mono-column platform 3 is adjusted. The arrangement 1 also comprises means for regulating the buoyancy of the buoyancy element 75, such as valves adapted to enable introduction and evacuation of air and water, means for providing pressurized air into the buoyancy element 75, and etcetera.

The buoyancy of the buoyancy element 75 is adapted to be adjusted so that mono-column platform 3 is set to a neutral or close to neutral buoyancy in respect to the water of the sea. Thereby, the mono-column platform 3 is balanced in respect to the water of the sea and the mono-column platform 3 can rotated from the horizontal orientation to the upstanding or the vertical orientation with small resistance.

In fig. 3b, the mono-column platform 3 is under rotation from the horizontal orientation to the vertical orientation. After that the second end portion 22 has been released from the second floating structure 12, the first end portion 20 of the mono-column platform 3 is rotated by means of the first pivot 50 of the positioning device 30 towards the surface 24 of the sea. Accordingly, second end portion 22 of the mono-column platform 3 is gradually rotated deeper into the sea.

The rotation on the first pivot 50 is performed after the buoyancy element 75 has been adjusted so that mono-column platform 3 has neutral or close to neutral buoyancy in respect to the water of the sea and while pulling the second end portion 22 of mono-column platform 3 by means of the second wiring arrangement 70.

In fig. 3c, the mono-column platform 3 has been rotated to the vertical orientation in respect to the surface 24 of the sea. The attachment means 32 is in the engaged state and the first end portion 20 20 of the mono-column platform 3 is held at the positioning device 30 at the first floating structure 10. The mono-column platform 3 has furthermore been lowered so that the second end portion 22 of the mono-column platform 3 is brought into contact with the seabed 5.

According to an embodiment, the buoyancy element 75 has been adjusted by the means for regulating the buoyancy so that the buoyancy of the mono-column platform 3 is lowered compared to the buoyancy during rotation of the mono-column platform 3. Preferably, the mono-column platform 3 has been set to a buoyancy that is slightly negative in respect to the water of the sea.

The second end portion 22 of the mono-column platform 3 comprises a suction anchor 80 comprising an active state and an inactive state. In the disclosed embodiment, the mono-column platform 3 comprises three suction anchors 80. The arrangement 1 further comprises means for providing suction to the suction anchor when the suction anchor 80 is in the active state. The suction anchors 80 are adapted to be anchored in the seabed 5 by means of setting the suction anchor 80 to the active state, connecting the means for providing suction to the suction anchor 80 and providing suction to the suction anchor 80. When the suction anchor 80 has been firmly anchored in the seabed 5, the suction anchor is set to the inactive state, the suction to the suction anchor 80 is interrupted and the means for providing suction to suction anchor 80 is disconnected. The operation of anchoring the suction anchor 80 in the seabed 5 may preferably be provided by a remotely operated underwater vehicle (ROV) 82.

After the mono-column platform 3 has been anchored in the seabed 5, the second wiring arrangement 70 is disconnected from the second end portion 22 of the mono-column platform 3. The operation of disconnecting the second wiring arrangement 70 may also be executed by means of the ROV 82.

Fig. 4a discloses a flow chart of a method for installing a mono-column platform 3 in the seabed 5 of the sea according to an embodiment of the invention.

The method is initiated in a step 110 comprising transporting the mono-column platform 3 to the position of installation or a position in vicinity to the position of installation. The mono-column platform 3 is arranged on the first floating structure 10 and the second floating structure 12 so that the first end portion 20 is held by the first floating structure 10 and the second end portion 22 is held by the second floating structure 12. Preferably, the first end portion 20 is arranged on the positioning device 30 at the first floating structure 10.

The step of transporting the mono-column platform 3 to the position of installation is preferably performed by means of that the first floating structure 10 tows the second floating structure 12 to the position of installation while the mono-column platform 3 is being held extending between the first floating structure 10 and the second floating structure 12.

In a step 120, the method comprises setting the attachment means of the positioning device 30 to an engaged state. Thereby, it is assured that the first end portion 20 of the mono-column platform 3 is maintained at the positioning device 30 at the first floating structure 10.

In a step 130, the method comprises releasing the second end portion 22 of the mono-column platform 3 from the second floating structure 12. The step preferably comprises detaching connections between the first floating structure 10 and the second floating structure 12, such as the first wire arrangement 26, and displacing the second floating structure 12 away from the first floating structure 10.

Preferably, the second end portion 22 of the mono-column platform 3 is arranged to be displaced on a displacement arrangement 60 on the second floating structure 12, such as an elongated frame 62 extending along the length of the second floating structure 12.

In a step 140, the method comprises rotating the platform 3 from a horizontal orientation to an upstanding a vertical orientation. The step comprises rotating the first end portion 20 of the mono-column platform 3 by means of the first pivot 50 of the positioning device 30 so that the first end portion 20 of the platform 3 is reoriented towards the surface 24 of the sea.

Preferably, the step of rotating the platform 3 also involves setting the buoyancy of a buoyancy element 75 to a neutral or close to neutral buoyancy in respect to the water of the sea. Preferably, the step comprises regulating the buoyancy element 75 by controllable filling the buoyancy element 75 with water and air. Preferably, the buoyancy element 75 is in the form of one or more chambers 77 in the mono-column platform 3. By means of setting the mono-column platform 3 to a neutral or close to neutral buoyancy in respect to the water the resistance when rotating the mono-column platform 3 from the horizontal orientation to the vertical orientation is small.

Preferably, the step of rotating the platform 3 also involves controlling the rotation of the mono-column platform 3 by means of controlling the stress subjected to a second wiring arrangement 70 between the first floating structure 10 and the second end portion 22 of the mono-column platform 3. The second wiring arrangement 70 facilitates the control of the rotation of the mono-column platform 3 from the horizontal orientation to the vertical orientation.

In a step 150, the method comprises setting the attachment means 32 to the disengaged state so that the first end portion 20 is released from the positioning device 30. By means of setting the attachment means 32 to the disengaged state, the first end portion 20 is free to be displace from the positioning device 30 at the first floating structure 10. Accordingly, the first floating structure 10 can be displaced away from the mono-column platform 3.

Preferably, step 150 comprises also detaching further connections to the first floating structure 10, such as the second wire arrangement 70 between the first floating structure 10 and the second end portion 22 of the mono-column platform 3.

Fig. 4b discloses a flow chart of a method for installing a mono-column platform 3 in the seabed 5 of the sea according to another embodiment. The second embodiment comprises in addition to the steps of the first embodiment in fig. 4a the following steps.

In a step a step 105, the method comprises mounting the mono-column platform 3 on the first floating structure 10 and the second floating structure 12 so that the first end portion 20 is held by the first floating structure 10 and the second end portion 22 is held by the second floating structure 12. Preferably, the first end portion 20 is arranged on the positioning device 30 at the first floating structure 10.

In a preferable embodiment, the step mounting the mono-column platform 3 comprises first arranging the second end portion 22 of the second floating structure 12 at a port, and then displacing the second floating structure 12 so to enable a lifting device to lift the first end portion 20 on to the first floating structure 10.

In a step 142, the method further comprises, after that the mono-column platform 3 has been arranged in the upstanding or the vertical orientation, lowering the second end portion 22 of the mono-column platform 3 towards and in contact with the seabed 5 of the sea.

In a step 144, the method further comprises anchoring the second end portion 22 of the mono-column platform 3 in the seabed 5 of the sea. Preferably, the anchoring is of the mono-column platform 3 is preformed by means of one or more suction anchors 80. The anchoring by means of suction anchor 80 comprises connecting means for providing suction to the suction anchor 80, setting the suction anchor 80 to the active state and providing suction to the suction anchor 80. Preferably, the mono-column platform 3 is anchored by a plurality of suction anchor 80, such a three suction anchor distributed around the second end portion 22 of the mono-column platform 3, see fig. 3c.

Fig. 5a discloses a flow chart of a method for detaching a mono-column platform 3 from the seabed 5 of the sea according to another embodiment of the invention.

In a step 210, the method comprises setting the attachment means 32 of the positioning device 30 to the disengaged state. Thereby, a receipt of the first end portion 20 of the mono-column platform 3 is enabled by the positioning device 30.

In a step 220, the method comprises receiving the first end portion 20 of the mono-column platform 3 by the attachment means of the position device 30. Thereafter, in a step 230, the method comprises setting the attachment means of the positioning device 30 to the engaged state so that the first end portion 20 of the mono-column platform 3 is held at the positioning device 30 of the first floating structure 10.

In a step 240, the method comprises rotating the first pivot 50 of the positioning device 30 so that the first end portion 20 of the mono-column platform 3 is reoriented away from the surface of the sea. Thereby, the mono-column platform 3 is rotated from an upstanding or a vertical orientation in direction towards a horizontal orientation. It shall be understood that for the detachment of the mono-column platform 3, it is not necessary for the mono-column platform 3 to be reoriented to a horizontal orientation. The mono-column platform 3 may be pull away from the position of installation in an orientation between the vertical orientation and the horizontal orientation.

In a step 250, the method comprises transporting the mono-column platform 3 away from the position of installation. The transportation of the mono-column platform 3 away from the position of installation may be executed using only the first floating structure 10.

Fig. 5b discloses a flow chart of a method for detaching a mono-column platform 3 from the seabed 5 of the sea according to another embodiment. This embodiment comprises in addition to the steps of the previous embodiment in fig. 5a the following steps.

In a step 202, the method comprises releasing the anchoring of second end portion 22 of the mono-column platform 3 from the seabed 5. In the case when the mono-column platform 3 is anchored by means of one or more suction anchors 80, the method preferably comprises setting the suction anchor 80 to the active state and releasing suction from the suction anchor 80.

In a step 204, the method comprise raising the mono-column platform 3 away from the seabed 5. Preferably, the mono-column platform 3 is raised by means of increasing buoyancy to the buoyancy element 75. Preferably, the buoyancy to the buoyancy element 75 is set to neutral or slightly positive in respect to the water of the sea. After that the mono-column platform 3 has been raised, the first end portion 20 of the mono-column platform 3 is attached by the attachment means 32 according to step 210.

It should be noted that the above-mentioned embodiments illustrate rather than limit the invention, and that those skilled in the art will be able to design many alternative embodiments without departing from the scope of the invention, as defined by the appended claims.

## Claims

1. A positioning device (30) for installing a mono-column platform (3) in the seabed (5) of the sea,
device (30) is adapted to be arranged at a first floating structure (10) and said mono-column platform (3) is adapted to be arranged extending between the first floating structure (10) and a second floating structure (12) so that a first end portion (20) of the mono-column platform (3) is held by the first floating structure (10) and a second end portion (22) of the mono-column platform (3) is held by the second floating structure (12), wherein the device comprises
- attachment means (32) for holding the first end portion (20) of the mono-column platform (3) at the positioning device (30), and
- a first pivot (50) adapted to enable the first end portion (20) of the mono-column platform (3) to be controllable pivoted while being held at the positioning device (30) by the attachment means (32) so that the first end portion (20) of the mono-column platform (3) is reoriented from a position between the first floating structure (10) and the second floating structure (12) towards the surface (24) of the sea after that the second end portion (22) of the mono-column platform (3) has been released from the second floating structure (12), wherein the first pivot (50) comprises a pitch rotational axis (R1) in relation to the first floating structure (10),
**characterised in that**
the positioning device (30) further comprises a second pivot (52) comprising a yaw rotational axis (R2) in relation to the first floating structure (10).and a third pivot (53) comprising a roll rotation axis (R3) in relation to the first floating structure (10), wherein the positioning device (30) further comprises an arm (55) connected to the second pivot (52) and comprising the first pivot (50) and the third pivot (53) at an end portion of the arm (55).

2. The positioning device (30) according to claim 1, wherein the attachment means (32) comprises at least one engagement member (35) adapted to be moved between an engaged state in which the engagement member (35) engages with an envelope surface of the mono-column platform (3) and a disengaged state in which the mono-column platform (3) is released from the positioning device (30) at the first floating structure (10).

3. The positioning device (30) according to claim 2, wherein the attachment means (32) comprise a cradle member (40) adapted to hold the mono-column platform (3) rotatable and axial displaceable in respect to an elongated axis (L) of the mono-column platform (3).

4. An arrangement (1) for installing a mono-column platform (3) in the seabed (5) of the sea, **characterised in that** the arrangement (1) comprises:
- a first floating structure (10) and a second floating structure (12) for transporting the mono-column platform (3) to a position of installation or a in vicinity to a position of installation, wherein the first floating structure (10) is adapted to hold a first end portion (20) of the mono-column platform (3) above the surface (24) of the sea and the second floating structure (12) is adapted to hold a second end portion (22) of the mono-column platform (3) above the surface (24) of the sea, and
- a positioning device (30) according to any of claim 1-3 arranged at the first floating structure (10), wherein the first pivot (50) of the positioning device (30) is adapted to enable the first end portion (20) of the mono-column platform (3) to be controllable pivoted while being held at the positioning device (30) by the attachment means (32) so that the first end portion (20) of the mono-column platform (3) is reoriented towards the surface (24) of the sea after that the second end portion (22) of the mono-column platform (3) has been released from the second floating structure (12).

5. The arrangement (1) according to claim 4, wherein the first floating structure (10) and the second floating structure (12) are connected by a first wiring arrangement (26).

6. The arrangement (1) according to any of claim 4-5, wherein the arrangement (1) comprises a second wiring arrangement (70) connected between the first floating structure (10) and the second end portion (22) of the mono-column platform (3).

7. The arrangement (1) according to any of claim 4-6, wherein at least one of the arrangement (1) and the mono-column platform (3) comprises an adjustable buoyancy element (75) adapted to provide buoyancy to the mono-column platform (3), and wherein the arrangement (1) comprises means for regulating the buoyancy of the buoyancy element (75).

8. The arrangement (1) according to any of claim 4-7, wherein the arrangement (1) comprises a displacement arrangement (60) at the second floating structure (12), which displacement arrangement (60) is adapted to enable the second end portion (22) of the mono-column platform (3) to be displaced on the displacement arrangement (60) away from the second floating structure (12).

9. The arrangement (1) according to claim 8, wherein the displacement arrangement (60) comprises an elongated frame (62) extending at least partly along a length of the second floating structure (12), wherein the elongated frame (62) comprises a protruding portion (64) arranged extending away from a rim of the second floating structure (12).

10. A method for installing a mono-column platform (3) in the seabed (5) of the sea by means of an arrangement according to any of claim 4-9, the method comprises
- transporting the mono-column platform (3) to a position of installation or a position in vicinity to the position of installation,
- setting the attachment means (32) to the engaged state so that the first end portion (20) is fixed to the positioning device (30) at the first floating structure (10),
- releasing the second end portion (22) of the mono-column platform (3) from the second floating structure (12),
- rotating the first pivot (50) of the positioning device (30) so that the first end portion (20) of the mono-column platform (3) is reoriented towards the surface (24) of the sea, and
- setting the attachment means (32) to the disengaged state so that the first end portion (20) is released from the positioning device (30).

11. The method according to claim 10, wherein the release of the second end portion (22) of the mono-column platform (3) from the second floating structure (12) comprises the steps of:
- detaching a first wiring arrangement (26) between the first floating structure (10) and the second floating structure (12), and
- moving the second floating structure (12) away from the first floating structure (10) so that the second end portion (22) of the mono-column platform (3) is released from the second floating structure (22).

12. The method according to any of claim 10-11, wherein the method further comprises
- setting the mono-column platform (3) to a neutral or close to neutral buoyancy in respect to the water of the sea, and
- rotating the first pivot (50) of the positioning device (30) so that the first end portion (20) of the mono-column platform (3) is reoriented towards the surface (24) of the sea while maintaining a neutral or close to neutral buoyancy of the mono-column platform (3) structure.

13. The method according to any of claim 10-12, wherein the method comprises
- controlling displacement of the second end portion (22) of the mono-column platform (3) by means of the second wiring arrangement (70) while the first end portion (20) of the mono-column platform (3) is rotated on the first pivot (50) of the positioning device (30),
- decreasing the buoyancy of the mono-column platform (3) after the mono-column platform (3) has been arranged in an upstanding position in respect to the surface (24) of the sea,
- detaching the second wiring arrangement (70) from the second end portion (22) of the mono-column platform (3) after the mono-column platform (3) has been arranged in an upstanding position in respect to the surface (24) of the sea, and
- anchoring the second end portion (22) of the platform (3) in the seabed (5).

14. A method for detaching a mono-column platform (3) from the seabed (5) of the sea by means of an arrangement according to any of claim 4-9, the method comprises
- setting the attachment means (32) of the positioning device (30) to the disengaged state,
- receiving the first end portion (20) of the mono-column platform (3) by the attachment means (32) of the position device,
- setting the attachment means (32) of the positioning device (30) to the engaged state so that the first end portion (20) is held at the positioning device (30),
- rotating the first pivot (50) of the positioning device (30) so that the first end portion (20) of the mono-column platform (3) is reoriented away from the surface (24) of the sea, and
- transporting the mono-column platform (3) away from the position of installation.

15. The method according to claim 14, wherein the method comprises
- releasing anchoring of the second end portion (22) of the mono-column platform (3) from the seabed (5) of the sea, and
- increasing the buoyancy of the mono-column platform (3) after releasing anchoring of the mono-column platform (3).

## Patentansprüche

1. Positionierungsvorrichtung (30) für das Installieren einer Einzelsäulenplattform (3) im Meeresgrund (5), wobei die Vorrichtung (30) ausgebildet ist, an einer ersten Schwimmanordnung (10) angeordnet zu werden und wobei die besagte Einzelsäulenplattform (3) ausgebildet ist, sich zwischen der ersten Schwimmanordnung (10) und einer zweiten Schwimmanordnung (12) auszudehnen, sodass ein erster Endbereich (20) der Einzelsäulenplattform (3) von der ersten Schwimmanordnung (10) gehalten wird und ein zweiter Endbereich (22) der Einzelsäulenplattform (3) von der zweiten Schwimmanordnung (12) gehalten wird, wobei die Vorrichtung aufweist
- Befestigungsmittel (32) zum Halten des ersten Endbereichs (20) der Einzelsäulenplattform (3) an der Positionierungsvorrichtung (30), und
- eine erste Gelenkverbindung (50), welche ausgebildet ist, es dem ersten Endbereich (20) der Einzelsäulenplattform (3) zu ermöglichen, kontrolliert geschwenkt zu werden, während er vom Befestigungsmittel (32) an der Positionierungsvorrichtung (30) gehalten wird, sodass der erste Endbereich (20) der Einzelsäulenplattform (3) von einer Position zwischen der ersten Schwimmanordnung (10) und der zweiten Schwimmanordnung (12) zur Meeresoberfläche (24) hin umorientiert wird, nachdem der zweite Endbereich (22) der Einzelsäulenplattform (3) von der zweiten Schwimmanordnung (12) gelöst wurde, wobei die erste Gelenkverbindung (50) in Bezug auf die erste Schwimmanordnung (10) eine Dreh-Nickachse (R1) aufweist,
**dadurch gekennzeichnet, dass**
die Positionierungsvorrichtung (30) ferner eine zweite Gelenkverbindung (52) aufweist, aufweisend eine Dreh-Gierachse (R2) in Bezug auf die erste Schwimmanordnung (10) und eine dritte Gelenkverbindung (53) aufweisend eine Dreh-Längsachse (R3) in Bezug auf die erste Schwimmanordnung (10), wobei die Positionierungsvorrichtung (30) ferner einen Arm (55) aufweist, welcher mit der zweiten Gelenkverbindung (52) verbunden ist, und welcher die erste Gelenkverbindung (50) und die dritte Gelenkverbindung (53) an einem Endbereich des Arms (55) aufweist.

2. Positionierungsvorrichtung (30) gemäss Anspruch 1, wobei das Befestigungsmittel (32) mindestens ein Eingriffsglied (35) aufweist, welches ausgebildet ist, sich zwischen einer Eingriffsstellung, in welcherdas Eingriffsglied (35) mit einer Ummantelungsfläche der Einzelsäulenplattform (3) im Eingriff steht, und einer gelösten Stellung, in welcherdie Einzelsäulenplattform (3) an der ersten Schwimmanordnung (10) von der Positionierungsvorrichtung (30) gelöst ist, zu bewegen.

3. Positionierungsvorrichtung (30) gemäss Anspruch 2, wobei das Befestigungsmittel (32) ein Wiegeglied (40) aufweist, welches ausgebildet ist, die Einzelsäulenplattform (3) drehbar und axial verschiebbar in Bezug auf eine Längsachse (L) der Einzelsäulenplattform (3) zu halten.

4. Anordnung (1) zum Installieren einer Einzelsäulenplattform (3) im Meeresgrund (5), **dadurch gekennzeichnet, dass** die Anordnung (1) aufweist:
- eine erste Schwimmanordnung (10) und eine zweite Schwimmanordnung (12) zum Transportieren der Einzelsäulenplattform (3) in eine Installationsposition oder in eine Nähe einer Installationsposition, wobei die erste Schwimmanordnung (10) ausgebildet ist, einen ersten Endbereich (20) der Einzelsäulenplattform (3) oberhalb der Meeresoberfläche (24) zu halten, und wobei die zweite Schwimmanordnung (12) ausgebildet ist, einen zweiten Endbereich (22) der Einzelsäulenplattform (3) oberhalb der Meeresoberfläche (24) zu halten, und
- eine Positionierungsvorrichtung (30) gemäss einem der Ansprüche 1-3, angeordnet an der ersten Schwimmanordnung (10), wobei die erste Gelenkverbindung (50) der Positionierungsvorrichtung (30) ausgebildet ist, es dem ersten Endbereich (20) der Einzelsäulenplattform (3) zu ermöglichen, kontrolliert geschwenkt zu werden, während er vom Befestigungsmittel (32) an der Positionierungsvorrichtung (30) gehalten wird, sodass der erste Endbereich (20) der Einzelsäulenplattform (3) zur Meeresoberfläche (24) hin umorientiert wird, nachdem der zweite Endbereich (22) der Einzelsäulenplattform (3) von der zweiten Schwimmanordnung (12) gelöst wurde.

5. Anordnung (1) gemäss Anspruch 4, wobei die erste Schwimmanordnung (10) und die zweite Schwimmanordnung (12) mittels einer ersten Drahtanordnung (26) verbunden sind.

6. Anordnung (1) gemäss einem der Ansprüche 4-5, wobei die Anordnung (1) eine zweite Drahtanordnung (70) aufweist, welche zwischen der ersten Schwimmanordnung (10) und dem zweiten Endbereich (22) der Einzelsäulenplattform (3) verbunden ist.

7. Anordnung (1) gemäss einem der Ansprüche 4-6, wobei mindestens eine ausgewählt aus der Anordnung (1) und der Einzelsäulenplattform (3) ein anpassbares Auftriebselement (75) aufweist, welches ausgebildet ist, der Einzelsäulenplattform (3) Auftrieb zu verschaffen, und wobei die Anordnung (1) Mittel zur Regulierung des Auftriebs des Auftriebselements (75) aufweist.

8. Anordnung (1) gemäss einem der Ansprüche 4-7, wobei die Anordnung (1) eine Verschiebungsanordnung (60) an der zweiten Schwimmanordnung (12) aufweist, wobei die Verschiebungsanordnung (60) ausgebildet ist, es dem zweiten Endbereich (22) der Einzelsäulenplattform (3) zu ermöglichen, auf der Verschiebungsanordnung (60) von der zweiten Schwimmanordnung (12) weg verschoben zu werden.

9. Anordnung (1) gemäss Anspruch 8, wobei die Verschiebungsanordnung (60) einen länglichen Rahmen (62) aufweist, welcher sich mindestens teilweise entlang einer Länge der zweiten Schwimmanordnung (12) erstreckt, wobei der längliche Rahmen (62) einen vorstehenden Bereich (64) aufweist, welcher derart angeordnet ist, dass er sich von einem Rand der zweiten Schwimmanordnung (12) weg erstreckt.

10. Verfahren zum Installieren einer Einzelsäulenplattform (3) im Meeresgrund (5) mittels einer Anordnung gemäss einem der Ansprüche 4-9, wobei das Verfahren beinhaltet:
- Transportieren der Einzelsäulenplattform (3) an eine Installationsposition oder an eine Position nahe der Installationsposition,
- Einstellen des Befestigungsmittels (32) in eine Eingriffsstellung, sodass der erste Endbereich (20) an der ersten Schwimmanordnung (10) an der Positionierungsvorrichtung (30) befestigt ist,
- Lösen des zweiten Endbereichs (22) der Einzelsäulenplattform (3) von der zweiten Schwimmanordnung (12),
- Drehen der ersten Gelenkverbindung (50) der Positionierungsvorrichtung (30), sodass der erste Endbereich (20) der Einzelsäulenplattform (3) zur Meeresoberfläche (24) hin umorientiert wird, und
- Einstellen des Befestigungsmittels (32) in eine gelöste Stellung, sodass der erste Endbereich (20) von der Positionierungsvorrichtung (30) gelöst wird.

11. Verfahren gemäss Anspruch 10, wobei das Lösen des zweiten Endbereichs (22) der Einzelsäulenplattform (3) von der zweiten Schwimmanordnung (12) die folgenden Schritte beinhaltet:
- Lösen einer ersten Drahtanordnung (26) zwischen der ersten Schwimmanordnung (10) und der zweiten Schwimmanordnung (12), und
- Wegbewegen der zweiten Schwimmanordnung (12) von der ersten Schwimmanordnung (10), sodass der zweite Endbereich (22) der Einzelsäulenplattform (3) von der zweiten Schwimmanordnung (22) gelöst wird.

12. Verfahren gemäss einem der Ansprüche 10-11, wobei das Verfahren ferner beinhaltet:
- Einstellen der Einzelsäulenplattform (3) in einen neutralen oder nahezu neutralen Auftrieb in Bezug auf das Meerwasser, und
- Drehen der ersten Gelenkverbindung (50) der Positionsvorrichtung (30), sodass der erste Endbereich (20) der Einzelsäulenplattform (3) zur Meeresoberfläche (24) hin umorientiert wird, während ein neutraler oder nahezu neutraler Auftrieb der Struktur der Einzelsäulenplattform (3) beibehalten wird.

13. Verfahren gemäss einem der Ansprüche 10-12, wobei das Verfahren beinhaltet:
- Steuerung der Verschiebung des zweiten Endbereichs (22) der Einzelsäulenplattform (3) mittels der zweiten Drahtanordnung (70), während der erste Endbereich (20) der Einzelsäulenplattform (3) auf der ersten Gelenkverbindung (50) der Positionierungsvorrichtung (30) gedreht wird,
- Verringern des Auftriebs der Einzelsäulenplattform (3) nachdem die Einzelsäulenplattform (3) in eine aufrechte Position in Bezug auf die Meeresoberfläche (24) gebracht wurde,
- Lösen der zweiten Drahtanordnung (70) vom zweiten Endbereich (22) der Einzelsäulenplattform (3) nachdem die Einzelsäulenplattform (3) in eine aufrechte Position in Bezug auf die Meeresoberfläche (24) gebracht wurde, und
- Verankern des zweiten Endbereichs (22) der Plattform (3) im Meeresgrund (5).

14. Verfahren zum Lösen einer Einzelsäulenplattform (3) vom Meeresgrund (5) mittels einer Anordnung gemäss einem der Ansprüche 4-9, wobei das Verfahren beinhaltet:
- Einstellen des Befestigungsmittels (32) der Positionsvorrichtung (30) in die gelöste Stellung,
- Aufnehmen des ersten Endbereichs (20) der Einzelsäulenplattform (3) mittels des Befestigungsmittels (32) der Positionsvorrichtung,
- Einstellen des Befestigungsmittels (32) der Positionierungsvorrichtung (30) in die Eingriffsstellung, sodass der erste Endbereich (20) an der Positionierungsvorrichtung (30) gehalten wird,
- Drehen der ersten Gelenkverbindung (50) der Positionierungsvorrichtung (30), sodass der erste Endbereich (20) der Einzelsäulenplattform (3) von der Meeresoberfläche (24) weg umorientiert wird, und
- Transportieren der Einzelsäulenplattform (3) weg von der Installationsposition.

15. Verfahren gemäss Anspruch 14, wobei das Verfahren beinhaltet:
- Lösen der Verankerung des zweiten Endbereichs (22) der Einzelsäulenplattform (3) vom Meeresgrund (5), und
- Erhöhen des Auftriebs der Einzelsäulenplattform (3) nach Lösen der Verankerung der Einzelsäulenplattform (3).

## Revendications

1. Un dispositif de positionnement (30) pour l'installation d'une plate-forme mono-colonne (3) sur le fond marin (5) de la mer,
le dispositif est agencé pour être disposé sur une première structure flottante (10) et la dite plate-forme mono-colonne (3) est agencé pour être disposé en s'étendant entre la première structure flottante (10) et une deuxième structure flottante (12) de telle sorte qu'une première partie d'extrémité (20) de la plate-forme mono-colonne (3) est maintenue par la première structure flottante (10) et qu'une deuxième partie d'extrémité (22) de la plate-forme mono-colonne (3) est maintenue par la deuxième structure flottante (12), dans lequel le dispositif comprend:
- des moyens de fixation (32) pour retenir la première partie d'extrémité (20) de la plate-forme mono-colonne (3) au niveau du dispositif de positionnement (30), et
- un premier pivot (50) agencé pour permettre à la première partie d'extrémité (20) de la plate-forme mono-colonne (3) d'être pivotée de manière contrôlable pendant qu'elle est maintenue au niveau du dispositif de positionnement (30) par les moyens de fixation (32), de telle sorte que la première partie d'extrémité (20) de la plate-forme mono-colonne (3) est réorientée depuis une position entre la première structure flottante (10) et la deuxième structure flottante (12) vers la surface (24) de la mer après que la deuxième partie d'extrémité (22) de la plate-forme mono-colonne (3) ait été libérée de la deuxième structure flottante (12),
dans lequel le premier pivot (50) comprend un premier axe de rotation de tangage (R1) par rapport à la première structure flottante (10),
**caractérisé en ce que**
le dispositif de positionnement (30) comprend en outre un deuxième pivot (52) comprenant un deuxième axe de rotation de lacet (R2) par rapport à la première structure flottante (10) et un troisième pivot (53) comprenant un troisième axe de rotation de roulis (R3) par rapport à la première structure flottante (10), dans lequel le dispositif de positionnement (30) comprend en outre un bras (55) relié au deuxième pivot (52) et comprenant le premier pivot (50) et le troisième pivot (53) est disposé adjacent au premier pivot (50), et le deuxième pivot (52) et le troisième pivot (53) au niveau d'une partie d'extrémité du bras (55).

2. Le dispositif de positionnement (30) selon la revendication 1, dans lequel les moyens de fixation (32) comprennent au moins un élément d'engagement (35) agencé pour être déplacé entre un état engagé dans lequel l'élément d'engagement (35) s'engage avec une surface d'enveloppe de la plate-forme mono-colonne (3) et un état désengagé dans lequel la plate-forme mono-colonne (3) est libérée du dispositif de positionnement (30) au niveau de la première structure flottante (10).

3. Le dispositif de positionnement (30) selon la revendication 2, dans lequel les moyens de fixation (32) comprennent un élément de berceau (40) agencé pour maintenir la plate-forme mono-colonne (3) rotative et déplaçable axialement par rapport à un axe allongé (L) de la plateforme mono-colonne (3).

4. Un agencement (1) pour installer une plate-forme mono-colonne (3) dans le fond marin (5) de la mer, **caractérisé en ce que** l'agencement (1) comprend:
- une première structure flottante (10) et une deuxième structure flottante (12) pour transporter la plate-forme mono-colonne (3) vers une position d'installation ou à proximité d'une position d'installation, dans lequel la première structure flottante (10) est adaptée pour maintenir une première partie d'extrémité (20) de la plate-forme mono-colonne (3) au-dessus de la surface (24) de la mer et la deuxième structure flottante (12) est agencée pour maintenir une deuxième partie d'extrémité (22) de la plate-forme mono-colonne (3) au-dessus de la surface (24) de la mer, et
- un dispositif de positionnement (30) selon l'une quelconque des revendications 1 à 3 disposé au niveau de la première structure flottante (10), dans lequel le premier pivot (50) du dispositif de positionnement (30) est adapté pour permettre à la première partie d'extrémité (20) de la plate-forme mono-colonne (3) d'être pivotée de manière contrôlable pendant qu'elle est maintenue au niveau du dispositif de positionnement (30) par les moyens de fixation (32) de telle sorte que la première partie d'extrémité (20) de la plate-forme mono-colonne (3) est réorientée vers la surface (24) de la mer après que la deuxième partie d'extrémité (22) de la plate-forme mono-colonne (3)) ait été libérée de la deuxième structure flottante (12).

5. L'agencement (1) selon la revendication 4, dans lequel la première structure flottante (10) et la deuxième structure flottante (12) sont reliées par un premier agencement de câblage (26).

6. L'agencement (1) selon l'une quelconque des revendications 4 à 5, dans lequel l'agencement (1) comprend un deuxième agencement de câblage (70) relié entre la première structure flottante (10) et la deuxième partie d'extrémité (22) de la monocylindre plate-colonne (3).

7. L'agencement (1) selon l'une quelconque des revendications 4 à 6, dans lequel au moins l'un parmi l'agencement (1) et la plate-forme mono-colonne (3) comprend un élément de flottabilité réglable (75) agencé pour fournir une flottabilité à la mono-colonne plate-forme (3), et dans lequel l'agencement (1) comprend des moyens pour réguler la flottabilité de l'élément de flottabilité (75).

8. L'agencement (1) selon l'une quelconque des revendications 4 à 7, dans lequel l'agencement (1) comprend un agencement de déplacement (60) au niveau de la deuxième structure flottante (12), lequel agencement de déplacement (60) est agencé pour permettre à la deuxième partie d'extrémité (22) de la plate-forme mono-colonne (3) d'être déplacée sur l'agencement de déplacement (60) à l'écart de la deuxième structure flottante (12).

9. L'agencement (1) selon la revendication 8, dans lequel l'agencement de déplacement (60) comprend un cadre allongé (62) s'étendant au moins en partie sur une longueur de la deuxième structure flottante (12), dans lequel le cadre allongé (62) comprend une partie en saillie (64) agencée de manière à s'éloigner d'un rebord de la deuxième structure flottante (12).

10. Un procédé pour installer une plate-forme mono-colonne (3) dans le fond marin (5) de la mer au moyen d'un agencement selon l'une quelconque des revendications 4 à 9, le procédé comprenant:
- le transport de la plate-forme mono-colonne (3) vers un position d'installation ou position à proximité de la position d'installation,
- le réglage des moyens de fixation (32) en état d'engagement de telle sorte que la première partie d'extrémité (20) est fixée au dispositif de positionnement (30) au niveau de la première structure flottante (10),
- la libération la deuxième partie d'extrémité (22) de la plate-forme mono-colonne (3) de la deuxième structure flottante (12),
- faire tourner le premier pivot (50) du dispositif de positionnement (30) de telle sorte que la première partie d'extrémité (20) de la plate-forme mono-colonne (3) est réorientée vers la surface (24) de la mer, et
- le réglage des moyens de fixation (32) en état de désengagement de telle sorte que la première partie d'extrémité (20) est libérée du dispositif de positionnement (30).

11. Le procédé selon la revendication 10, dans lequel la libération de la deuxième partie d'extrémité (22) de la plate-forme mono-colonne (3) de la deuxième structure flottante (12) comprend les étapes de:
- le détachement d'un premier agencement de câblage (26) entre la première structure flottante (10) et la deuxième structure flottante (12), et
- le déplacement de la deuxième structure flottante (12) à l'écart de la première structure flottante (10) de telle sorte que la deuxième partie d'extrémité (22) de la plate-forme mono-colonne (3) est libérée de la deuxième structure flottante (22).

12. Le procédé selon l'une quelconque des revendications 10 à 11, dans lequel le procédé comprend en outre
- le réglage de la plate-forme mono-colonne (3) à une flottabilité neutre ou proche de neutre par rapport à l'eau de la mer, et
- la rotation du premier pivot (50) du dispositif de positionnement (30) de telle sorte que la première partie d'extrémité (20) de la plate-forme mono-colonne (3) est réorientée vers la surface (24) de la mer tout en conservant une flottabilité neutre ou proche de neutre de la structure de plate-forme mono-colonne (3).

13. Le procédé selon l'une quelconque des revendications 10 à 12, dans lequel le procédé comprend
- le contrôle du déplacement de la deuxième partie d'extrémité (22) de la plate-forme mono-colonne (3) au moyen du deuxième agencement de câblage (70) pendant que la première partie d'extrémité (20) de la plate-forme mono-colonne (3) est mise en rotation sur le premier pivot (50) du dispositif de positionnement (30)
- la diminution de la flottabilité de la plate-forme mono-colonne (3) après que la plate-forme mono-colonne (3) ait été disposée dans une position verticale par rapport à la surface (24) de la mer,
- le détachement du deuxième agencement de câblage (70) de la deuxième partie d'extrémité (22) de la plate-forme mono-colonne (3) après que la plate-forme mono-colonne (3) ait été disposée dans une position verticale par rapport à la surface (24) de la mer, et
- l'ancrage de la deuxième partie d'extrémité (22) de la plate-forme (3) dans le fond marin (5).

14. Un procédé pour détacher une plate-forme mono-colonne (3) du fond marin (5) de la mer au moyen d'un agencement selon l'une quelconque des revendications 4 à 9, le procédé comprenant
- le réglage des moyens de fixation (32) du dispositif de positionnement (30) à l'état de désengagement,
- la réception de la première partie d'extrémité (20) de la plateforme mono-colonne (3) par les moyens de fixation (32) du dispositif de positionnement,
- le réglage les moyens de fixation (32) du dispositif de positionnement (30) à l'état d'engagement de telle sorte que la première partie d'extrémité (20) est maintenue au niveau du dispositif de positionnement (30),
- la rotation du premier pivot (50) du dispositif de positionnement (30) de telle sorte que la première partie d'extrémité (20) de la plate-forme mono-colonne (3) est réorientée à l'écart de la surface (24) de la mer, et
- le déplacement de la plate-forme mono-colonne (3) à l'écart de la position d'installation.

15. Le procédé selon la revendication 14, dans lequel le procédé comprend:
- la libération de l'ancrage de la deuxième partie d'extrémité (22) de la plate-forme mono-colonne (3) du fond marin (5) de la mer, et
- l'augmentation de la flottabilité de la plate-forme mono-colonne (3) après la libération de l'ancrage de la plate-forme mono-colonne (3).
